# EUROPÄISCHE PATENTSCHRIFT

(11) **EP 1 365 984 B1**
(45) Veröffentlichungstag und Bekanntmachung des Hinweises auf die Patenterteilung: **16.03.2005**
(21) Anmeldenummer: 01909526.4
(22) Anmeldetag: 23.01.2001
(51) Int. Cl.: B66C 1/00

(54) **LEERCONTAINERLAGER ZUM ZWISCHENLAGERN VON ISO-LEERCONTAINERN**
EMPTY CONTAINER STORAGE FOR THE INTERMEDIATE STORAGE OF EMPTY ISO CONTAINERS
DEPOT POUR CONTENEURS VIDES SERVANT AU STOCKAGE INTERMEDIAIRE DE CONTENEURS VIDES ISO

(30) Priorität: 23.02.2000 DE 10009737
(43) Veröffentlichungstag der Anmeldung: 03.12.2003
(73) Patentinhaber: Gottwald Port Technology GmbH, 40597 Düsseldorf (DE)
(72) Erfinder: FRANZEN, Hermann, 41238 Mönchengladbach (DE); KRÖLL, Joachim, 41363 Jüchen (DE)
(74) Vertreter: Moser, Jörg Michael, Dipl.-Ing.
(86) Internationale Anmeldenummer: PCT/DE2001/000317
(87) Internationale Veröffentlichungsnummer: WO 2001/062656

(56) Entgegenhaltungen:
- DE-A- 1 556 636
- DE-A- 1 915 737
- DE-A- 2 352 176

## Beschreibung

Die Erfindung betrifft ein Leercontainerlager zum Zwischenlagern von ISO-Leercontainem, insbesondere in vollautomatischen Seehafen- oder Binnenhafen-Containerterminals, mit einem automatisierbaren, das Leercontainerlager überspannenden, auf einer aufgeständerten Kranbahn verfahrbaren Brückenportalkran mit einer darauf in dessen Längsrichtung verfahrbaren Laufkatze, an der eine vertikale Hubsäule für ein heb- und senkbares Lastaufnahmemittel für den Leercontainer befestigt ist.

Während vollautomatische Containerterminals sich immer mehr verbreiten, werden derzeit Leercontainerlager ausschließlich manuell betrieben und lassen sich daher nicht in die vollautomatische, durch eine übergeordnete Lagerlogistik gesteuerten Terminals integrieren. Das Stapeln und Transportieren der Leercontainer erfolgt mittels Reach Stacker, Gabelstapler oder ähnlichen mobilen Geräten, die auch den Transport zwischen dem Leercontainerlager und dem Container-Lagermodulen übernehmen.

Die DE 1 556 636 offenbart eine Anlage zum Umschlagen von Containern zwischen einem an einem Kai liegenden Schiff und einer Speicheranlage mit wenigstens einem Portainer, dessen Katzfahrbahn-Träger einerseits das Schiff und andererseits eine Fördereinrichtung auf dem Kai überspannt. Die Fördereinrichtung bildende, nebeneinander parallel zur Kai-Kante verlegte Transportrollbahnen haben reversierbare Antriebsrollen für parallel zur Kai-Kante liegende Container und sind mit der Speicheranlage durch Aus- und Eintritts-Rollenbahnen verbunden, welche Antriebsrollen für die Fördereinrichtung rechtwinklig zur Kai-Kante haben. Der als Speicheranlage dienende Lageplatz ist von einem Laufkran überspannt, dessen Laufkatze an einem lotrecht geführten Baum einen Spreader trägt.

Aufgabe der vorliegenden Erfindung ist es, ein Leercontainerlager zu schaffen, das in den vollautomatischen Betrieb eines Container-Terminals integrierbar ist, um dadurch die Umschlagsleistung im Vergleich zum manuell betriebenen Leercontainerlager ohne zusätzliche Kosten zu erhöhen.

Zur Lösung der Aufgabe wird erfindungsgemäß ein Leercontainerlager vorgeschlagen, das dadurch gekennzeichnet ist, dass der Spreaderträger mit dem Spreader in der vertikalen Längsmittelebene des Spreaderwagens aus einer der Hubsäule nahen, in eine der Hubsäule ferne Position verschwenkbar ist. Diese Verschwenkbarkeit dient der später noch beschriebenen Funktion des Lastaufnahmemittels, das dadurch in der Lage ist, den Container in einer gewissen Entfernung von der Hubsäule abzusetzen bzw. aufzunehmen.

Der Brückenportalkran, der das gesamte Leercontainerareal überspannt und an dem der Stapelkran verfahrbar ist, ist Kern der erfindungsgemäßen Anlage. Brückenportalkrane sind prinzipiell bekannt und sind in ausgereifter Technik verfügbar. Durch Aufständern auf einer Kranbahn wird die notwendige Stapelhöhe von bis zu 8 übereinandergestapelten Containern erreicht, die mit dem Lastaufnahmemittel aufnehmbar und absenkbar sind, das an der vertikalen Hubsäule auf- und abbewegbar ist. Die Hubsäule selbst ist Teil der Laufkatze, die auf dem Brückenportalkran verfahrbar ist, so dass durch Verfahren sowohl des Brückenportalkranes als auch der Laufkatze jeder Platz des Leercontainerlagers erreichbar ist.

Günstigerweise besteht die vertikale Hubsäule aus einer Gittermaststruktur mit vorzugsweise drei Gurten, an der das Lastaufnahmemittel vertikal verfahrbar geführt ist. Der im Querschnitt dreieckige Gittermast ist einerseits leicht und andererseits ausreichend stabil, um das Lastaufnahmemittel mit der Last zu halten und an der Hubsäule zu führen.

Der Spreaderwagen kann nach einem weiteren Merkmal der Erfindung mittels eines Doppelseilhubwerkes an der Hubsäule vertikal verfahren werden, wobei an der Hubsäule Umlenkrollen für die Seile vorgesehen sind. Der Spreader für die ISO-Container ist an einem vom Spreaderwagen abspreizbaren Spreaderträger angeordnet und so eingerichtet, dass er die unterschiedlichen Containergrößen ergreifen kann.

Günstigerweise ist der Spreaderträger mit dem Spreaderwagen über Parallellenker verbunden, die mittels einer Kolben-Zylindereinheit verschwenkbar sind. Die Parallelfenkerführung ermöglicht eine im wesentlichen horizontalen Bewegung des Spreaderträgers und damit eine günstige Lastführung, wobei Spreader und Leercontainer eine von der Länge der Parallellenker abhängige Bogenbewegung ausführen.

Die Länge der Parallellenker und deren Schwenkbewegung sind so aufeinander abgestimmt, dass nach einem weiteren Merkmal der Erfindung der Spreaderträger zusammen mit dem Spreader in seiner der Hubsäule fernen Schwenkposition derartig weit ausschwenkbar ist, dass bei einer der Kranbahnschiene nahen Stellung der Hubsäule der Spreader die Ständer der Kranbahn durchgreift. Durch dieses Merkmal wird es möglich, mit dem Spreader in eine Position zu verschwenken, die außerhalb des Leercontainerlagers angeordnet ist. Auf diese Weise können Container, die außerhalb des Leercontainerlagers gestapelt oder antransportiert sind, aufgenommen werden bzw. können Leercontainer aus dem Leercontainerlager ausgeschleust werden, um sie außerhalb des Lagers aufzunehmen. des Leercontainerlagers angeordnet ist. Auf diese Weise können Container, die außerhalb des Leercontainerlagers gestapelt oder antransportiert sind, aufgenommen werden bzw. können Leercontainer aus dem Leercontainerlager ausgeschleust werden, um sie außerhalb des Lagers aufzunehmen.

Beim Stapeln der Container im Leercontainerlager in einer Höhe von bis zu acht Containern kann es bei Windlasten zu Instabilität mindestens der ersten Stapelreihe kommen. Um dies zu verhindern, wird nach einem weiteren Merkmal der Erfindung vorgeschlagen, dass zur Stabilisierung mindestens der ersten Containerstapelreihe in dem der Kranbahn nahen Bereich ein Lagergerüst vorgesehen ist, das aus vertikalen Säulen oder Trägern besteht, deren Höhe der Höhe der maximal aufstapelbaren Container entspricht und deren horizontaler Abstand kleiner als die Längserstreckung des kürzesten zu stapelnden Containers ist, wobei mindestens eine Gasse zwischen zwei Säulen oder Trägern gebildet wird, durch die auch der längste Container in seiner Querrichtung austragbar ist. Die vorzugsweise im Boden eingelassenen vertikalen Säulen oder Träger verhindem ein Umfallen des Stapels und ermöglichen gleichzeitig in einem größeren Zwischenraum zwischen den Säulen oder Trägem ein Austragen der Container.

Schließlich wird ergänzend vorgeschlagen, dass die Sortierung im Containerlager nach Größe, Höhe und Ausführung der ISO-Container erfolgt. Da Container bekanntlich in ihren Normgrößen unterschiedliche Längen und Höhen aufweisen, ist zur Bildung von stabilen und geordneten Stapeln vorgesehen, eine Sortierung der Container vorzunehmen. Darüber hinaus werden Standardcontainer, Open-Top-Container, Tankcontainer, Schüttgutcontainer und Flads jeweils gesondert gestapelt, möglich ist es auch, die Container diverser Reedereien an gesammelten Plätzen abzustellen.

Die vorliegende Erfindung ist vorteilhaft, weil sie für ein vollautomatisches Containerterminal die notwendige Ergänzung zum vollautomatischen Containerlager bietet. Beim Einsatz des automatischen Stapelkrans erhöht sich die Umschlagleistung im Vergleich zum manuell betriebenen Leercontainerlager deutlich, ohne dass im Vergleich zum manuellen Lager zusätzliche Kosten entstehen.

Ein Ausführungsbeispiel der Erfindung wird in der Zeichnung dargestellt und nachfolgend beschrieben. Es zeigt:
- Figur 1: ein Schnitt durch ein Containerlager mit integriertem Leercontainerlager,
- Figur 2: das Containerlager nach Figur 1 beim Aufbau der ersten Leercontainerreihe,
- Figur 3: einen weiteren Schnitt durch das Containerlager nach Figur 1,
- Figur 4: das Leercontainer-Lagermodul,
- Figur 5: eine Detailansicht des Spreaderträgers in der Position mit minimaler Ausladung,
- Figur 6: eine Detailansicht des Spreaderträgers in der Position mit maximaler Ausladung, und
- Figur 7: einen Schnitt durch den Dreigurtmast oberhalb des Spreaderwagens.

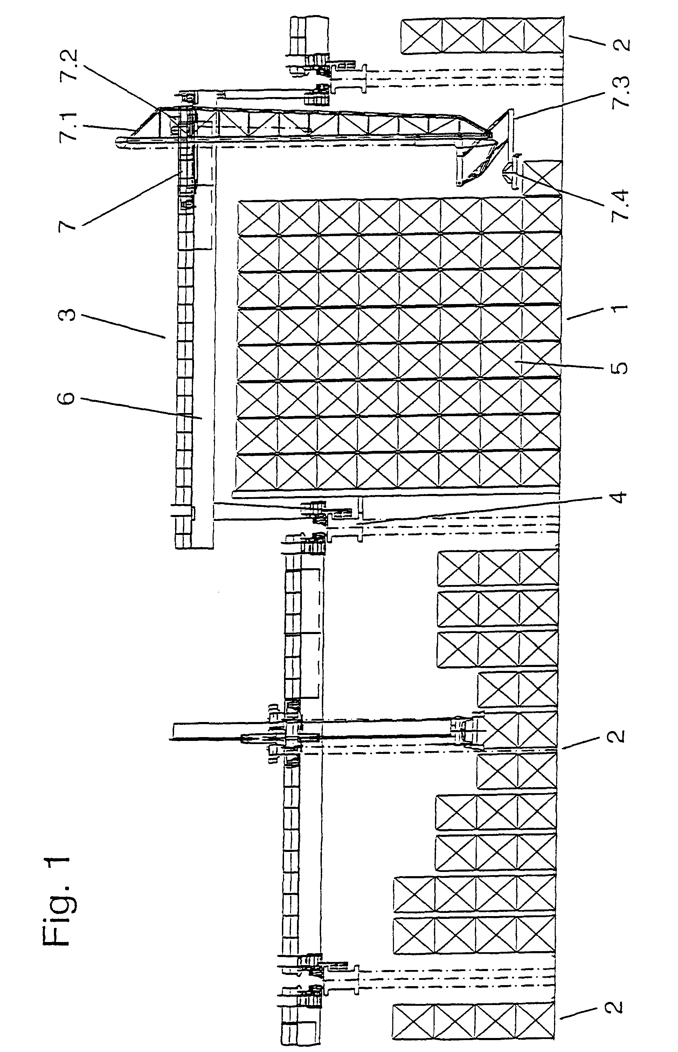

In Figur 1 ist ein Querschnitt durch ein erfindungsgemäßes Leercontainer-Lagermodul 1 mit angrenzenden Container-Lagermodulen 2 dargestellt. Im Leercontainer-Lagermodul 1 bedient ein Stapelkran 3, der auf den aufgeständerten Kranbahnen 4 verfährt, das Leercontainerlager 5. Der Stapelkran 3 besteht aus der portalartigen Brücke 6 und der Katze 7. Die Hauptkomponenten der Katze sind der Dreigurtmast 7.1, das Doppelseilhubwerk 7.2, der Spreaderwagen 7.3 und der schwimmend gelagerte Spreader 7.4 in der Position der minimalen Ausladung.

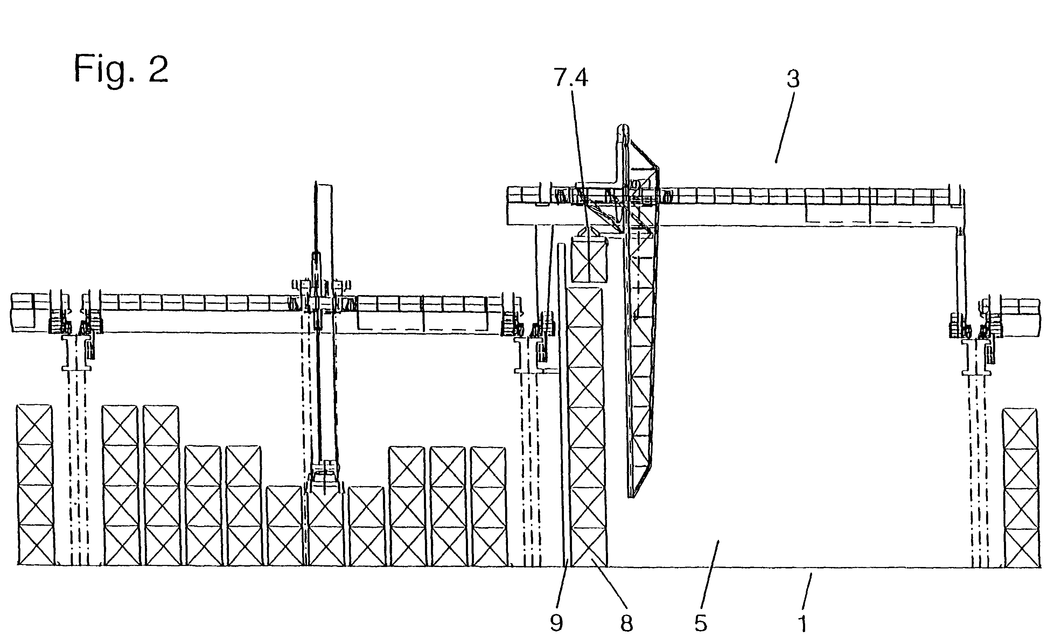

In Figur 2 ist ebenfalls ein Schnitt durch das Containerlager mit integriertem Leercontainerlager gemäß Figur 1 dargestellt. Die Figur zeigt das Leercontainer-Lagermodul 1 und den darin arbeitenden Stapelkran 3 beim Aufbau der ersten Reihe Leercontainer 8 im Leercontainerlager 5. Zur Stabilisierung der ersten Reihe dient ein Lagergerüst 9, das aus vertikal im Boden eingelassenen Trägem besteht. Der Spreader 7.4 befindet sich für diese normale Stapeltätigkeit innerhalb des Leercontainerlagers 5 in der Position minimaler Ausladung.

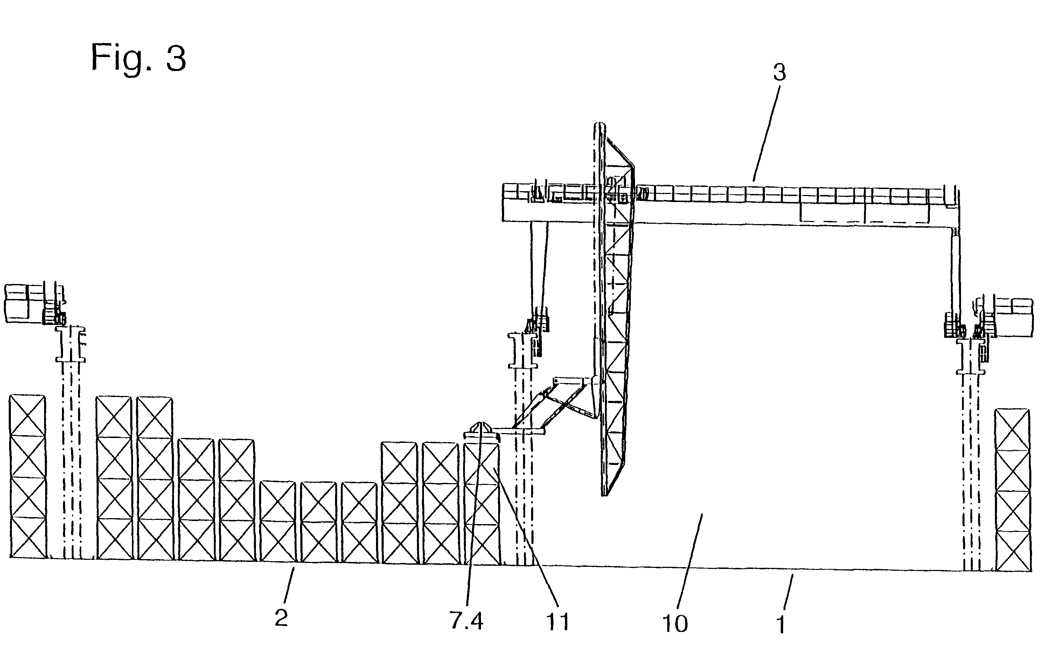

Figur 3 zeigt das Leercontainer-Lagermodul 1 und den darin arbeitenden Stapelkran 3 in einem Ladebereich 10 außerhalb des Leercontainerlagers 5 bei der Übernahme eines Leercontainers 11 aus der ersten Reihe des benachbarten Container-Lagermoduls 2. Der Spreader 7.4 wurde für diese Umschlagtätigkeit außerhalb des Leercontainerlagers 5 in die Position der maximalen Auslenkung geschwenkt.

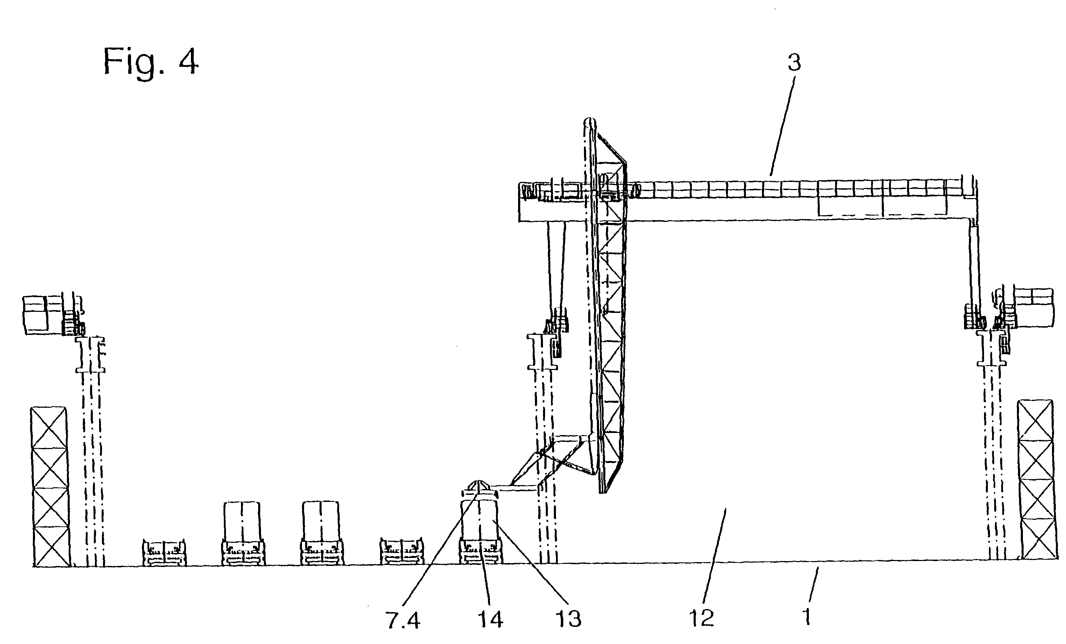

In Figur 4 ist ein weiterer Schnitt durch ein Containerlager mit integriertem Leercontainerlager dargestellt. Die Figur zeigt das Leercontainer-Lagermodul 1 und darin den Stapelkran 3 in einem Ladebereich 12 außerhalb des Leercontainerlagers bei der Übernahme eines Leercontainers 13 von einem FTF (führerloses Transportfahrzeug) 14. Der Spreader 7.4 wurde für diese Umschlagtätigkeit außerhalb des Leercontainerlagers 5 in die Position der maximalen Ausladung geschwenkt.

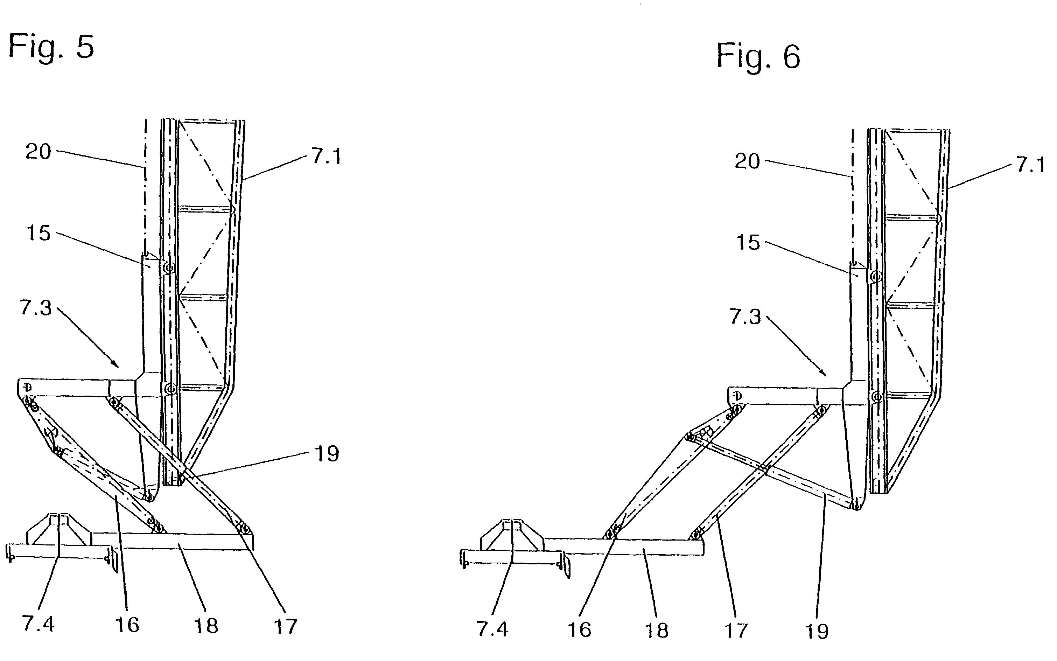

Der Spreaderträger und die Positionen der minimalen und maximalen Ausladung sind in den Figuren 5 und 6 dargestellt. Figur 5 zeigt den Spreaderwagen 7.3, bestehend aus dem Führungsrahmen 15, dem Drucklenker 16, dem Parallellenker 17, dem Spreader-Träger 18 und dem schwimmend gelagerten Spreader 7.4. Beide Hubzylinder 19 bestimmen die minimale Endposition des Spreaders. Mittels zweier Seile 20 des Doppelhubwerkes 7.2 bewegt sich der Spreaderwagen zur Positionierung in vertikaler Richtung entlang dem Dreigurtmast 7.1.

Figur 6 zeigt den Spreaderwagen 7.3 in seiner maximalen Ausladung. Die Hubzylinder 19 sind voll ausgefahren, wodurch der Parallellenker 17 und der Drucklenker 16 in der Zeichnung nach links verschwenken und somit den Spreaderträger in eine Position bewegen, in der er vom Dreigurtmast entfernt ist.

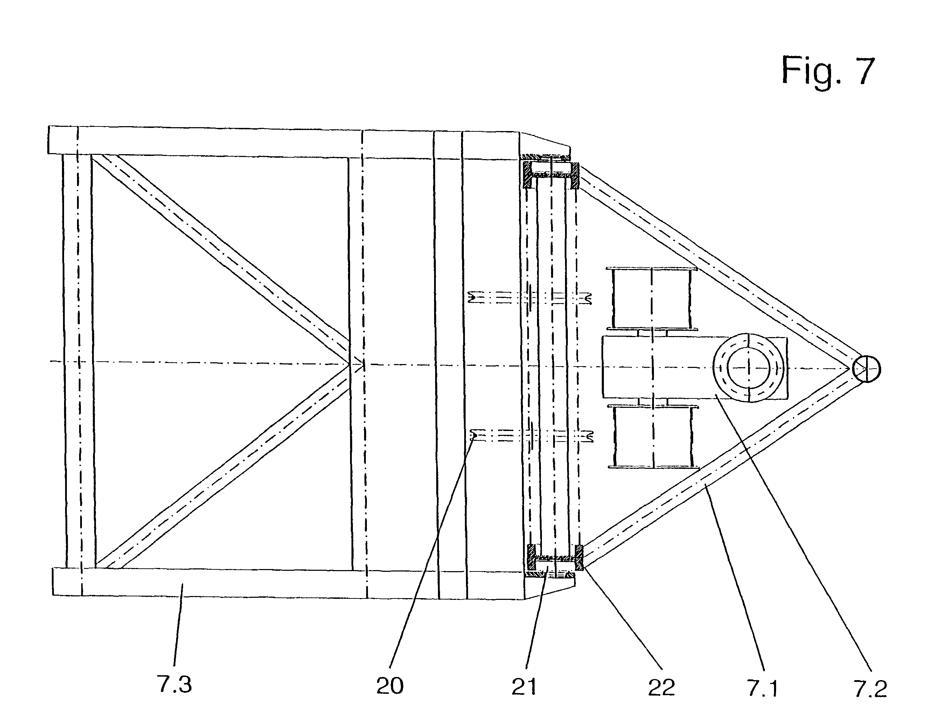

Figur 7 zeigt den Dreigurtmast 7.1, das Doppelseilhubwerk 7.2 und den Spreaderwagen 7.3 im Querschnitt. Der durch vier Rollen 21 an zwei Doppel-T-Trägern 22 geführte Spreaderwagen ist an den beiden Hubseilen 20 aufgehängt und mittels eines nicht dargestellten Hubwerkes am Dreigurtmast senkrecht verfahrbar.

Zum Stapeln der Leercontainer im Leercontainerlager 5 verfährt die Katze 7 mit dem daran angeordneten Dreigurtmast 7.1 beispielsweise in die in Figur 3 dargestellte Position, wobei der Spreader 7.4 in seiner größten Ausladung durch die aufgeständerte Kranbahn hindurchgreift. Der Spreader nimmt einen Leercontainer 11 auf und bewegt diesen durch eine zwischen den Kranbahnstützen gebildete Gasse hindurch in den Bereich des Leercontainerlagers 5. Dort wird, wie in Figur 2 dargestellt, eine erste Reihe 8 von Leercontainern gestapelt, die durch das Lagergerüst 9 gestützt ist. In gleicher Weise werden weitere Reihen gebildet (Figur 1), wobei der Spreader 7.4 in der Stellung gemäß der Ausladung positioniert ist.

Wie zuvor beschrieben, können die Leercontainer von einem FTF abgehoben oder auf dieses aufgesetzt werden, wie dies in Figur 4 schematisch dargestellt ist. Sinnvollerweise erfolgt die Sortierung im Lager nach Containertypen, also nach Größen (20', 30', 40', 45',48' 50'), nach Höhe (4', 4'6", 8', 8'6", 9', 9'6" und 9'6½"), Ausführung (Standard-Container, Oben-Top-Container, Tank-Container, Schüttgutcontainer und Flads), sowie nach Eigentümem (diverse Reedereien).

Das erfindungsgemäße Containerlager arbeitet vollautomatisch nach einem festgelegten Programm und läßt sich in den Ablauf eines automatischen Container-Terminals integrieren.

## Patentansprüche

1. Leercontainerlager zum Zwischenlagern von ISO-Leercontainern, insbesondere in vollautomatischen Seehafen- oder Binnenhafen-Containerterminals, mit einem automatisierbaren, das Leercontainerlager (1) überspannenden, auf einer aufgeständerten Kranbahn (4) verfahrbaren Brückenportalkran (6) mit einer darauf in dessen Längsrichtung verfahrbaren Laufkatze (7), an der eine vertikale Hubsäule (7.1) für ein heb- und senkbares Lastaufnahmemittel (7.3,7.4) für den Leercontainer (8,11,13) befestigt ist, wobei das Lastaufnahmemittel ein Spreader (7.4) ist, der an einem mittels Rollen (21) an der Hubsäule (7.1) geführten Spreaderwagen (7.3) an einem Spreaderträger (18) angeordnet ist,
**dadurch gekennzeichnet, dass** der Spreaderträger (18) mit dem Spreader (7.3) in der vertikalen Längsmittelebene des Spreaderwagens (7.3) aus einer der Hubsäule (7.1) nahen in eine der Hubsäule (7.1) feme Position verschwenkbar ist.

2. Leercontainerlager nach Anspruch 1,
**dadurch gekennzeichnet,**
**dass** die vertikale Hubsäule (7.1) aus einer Gittermaststruktur mit vorzugsweise drei Gurten gebildet ist, an dem das Lastaufnahmemittel (7.3, 7.4) vertikal verfahrbar geführt ist.

3. Leercontainerlager nach Anspruch 1 oder 2,
**dadurch gekennzeichnet,**
**dass** zum vertikalen Verfahren des Spreaderwagens (7.3) ein Doppelseilhubwerk (7.2) mit an der Hubsäule (7.1) vorgesehenen Umlenkrollen vorgesehen ist.

4. Leercontainerlager nach einem der Ansprüche 1 bis 3,
**dadurch gekennzeichnet,**
**dass** der Spreaderträger (18) mit dem Spreaderwagen (7.3) über Parallellenker (17) verbunden ist, die mittels mindestens einer Kolben-Zylindereinheit (19) verschwenkbar sind.

5. Leercontainerlager nach einem der Ansprüche 1 bis 4,
**dadurch gekennzeichnet,**
**dass** der Spreaderträger (18) zusammen mit dem Spreader (7.3) in seiner der Hubsäule (7.1) fernen Schwenkposition derartig weit ausschwenkbar ist, dass bei einer der Kranbahnschiene nahen Stellung der Hubsäule (7.1) der Spreader (7.4) die Ständer der Kranbahn (4) durchgreift.

6. Leercontainerlager nach einem der Ansprüche 1 bis 5,
**dadurch gekennzeichnet,**
**dass** zur Stabilisierung mindestens der ersten Containerstapelreihe (8) in dem der Kranbahn (4) nahen Bereich ein Lagergerüst (9) vorgesehen ist, das aus vertikalen Säulen oder Trägern besteht, deren Höhe der Höhe der maximal aufstapelbaren Container (13) entspricht und deren horizontaler Abstand kleiner als die Längserstreckung des kürzesten zu stapelnden Containers (13) ist, wobei mindestens eine Gasse zwischen zwei Säulen oder Trägem gebildet wird, durch die auch der längste Container (13) in seiner Querrichtung austragbar ist.

## Claims

1. Empty container store for intermediate storage of empty ISO containers, in particular in fully automated sea port or inland port container terminals, having a bridge gantry crane (6) which can be automated, which spans the empty container store (1), can travel on an elevated crane track (4) and has a crane carriage (7) which can travel on, and in the longitudinal direction of, the bridge gantry crane, to which crane carriage is attached a vertical lifting column (7.1) for a load receiving means (7.3, 7.4), which can be raised and lowered, for the empty container (8, 11, 13), wherein the load receiving means is a spreader (7.4) which is disposed on a spreader carriage (7.3) on a spreader carrier (18), which spreader carriage is guided by means of rollers (21) on the lifting column (7.1),
**characterised in that** the spreader carrier (18) with the spreader (7.3) in the vertical longitudinal middle plane of the spreader carriage (7.3) can be pivoted out of a position close to the lifting column (7.1) into a position remote from the lifting column (7.1).

2. Empty container store as claimed in claim 1, **characterised in that** the vertical lifting column (7.1) is formed from a lattice mast structure with preferably three belts, on which lattice mast structure the load receiving means (7.3, 7.4) is guided in a vertically moveable manner.

3. Empty container store as claimed in claim 1 or 2, **characterised in that** for vertical movement of the spreader carriage (7.3) a double cable lifting mechanism (7.2) is provided having deviating rollers provided on the lifting column (7.1).

4. Empty container store as claimed in any one of claims 1 to 3, **characterised in that** the spreader carrier (18) is connected to the spreader carriage (7.3) via parallel control rods (17) which can be pivoted by means of at least one piston-cylinder unit (19).

5. Empty container store as claimed in any one of claims 1 to 4, **characterised in that** the spreader carrier (18) together with the spreader (7.3) in its pivoted position remote from the lifting column (7.1) can be pivoted out to such an extent that in a position of the lifting column (7.1) close to the crane track rail the spreader (7.4) engages through the uprights of the crane track (4).

6. Empty container store as claimed in any one of claims 1 to 5, **characterised in that** in order to stabilise at least the first container stack row (8) in the area close to the crane track (4) a store frame (9) is provided which consists of vertical columns or supports, the height of which corresponds to the height of the maximum number of containers (13) which can be stacked, and the horizontal spacing of which is smaller than the longitudinal extension of the shortest containers (13) to be stacked, wherein at least one alley is formed between two columns or supports, through which the longest container (13) can also be carried out in its transverse direction.

## Revendications

1. Dépôt pour conteneurs vides, servant au stockage intermédiaire de conteneurs ISO vides, en particulier dans des terminaux automatisés pour conteneurs, de ports de mer ou de ports intérieurs, avec un pont roulant portique (6) pouvant être automatisé, enjambant le dépôt (1) pour conteneurs, mobile sur un chemin de roulement surélevé (4), avec un chariot (7) mobile dans son sens longitudinal, auquel est fixée une colonne de levage verticale (7.1) pour un dispositif (7.3, 7.4) de prise d'une charge, qui peut être soulevé et abaissé, pour le conteneur vide (8, 11, 13), le dispositif de prise d'une charge étant un palonnier (7.4) agencé sur un chariot de palonnier (7.3) guidé sur la colonne de levage (7.1) au moyen de rouleaux (21), sur un porte palonnier (18),
**caractérisé en ce que** le porte palonnier (18) peut être pivoté avec le palonnier (7.3) dans le plan vertical longitudinal médian du chariot de palonnier (7.3), d'une position proche de la colonne de levage (7.1) à une position éloignée de la colonne de levage (7.1).

2. Dépôt pour conteneurs vides selon la revendication 1,
**caractérisé en ce que**
la colonne de levage verticale (7.1) est formée par une structure de mât en treillis, avec de préférence trois membrures, sur laquelle le dispositif (7.3, 7.4) de prise d'une charge est guidé pour pouvoir se déplacer verticalement.

3. Dépôt pour conteneurs vides selon la revendication 1 ou 2,
**caractérisé en ce que**
un mécanisme de levage à double câble (7.2) avec des rouleaux de renvoi prévus sur la colonne de levage (7.1), est prévu pour le déplacement vertical du chariot de palonnier (7.3).

4. Dépôt pour conteneurs vides selon l'une des revendications 1 à 3,
**caractérisé en ce que**
le porte palonnier (18) est relié au chariot de palonnier (7.3) par des tringles parallèles, qui peuvent être pivotées au moyen d'au moins un dispositif à piston-cylindre (19).

5. Dépôt pour conteneurs vides selon l'une des revendications 1 à 4,
**caractérisé en ce que**
le porte palonnier (18) peut être pivoté avec le palonnier (7.3), dans sa position de pivotement éloignée de la colonne de levage (7.1), si loin que, pour une position de la colonne de levage (7.1) proche de la voie de roulement du portique, le palonnier (7.4) se dispose au delà des piliers de la voie de roulement (4) du portique.

6. Dépôt pour conteneurs vides selon l'une des revendications 1 à 5,
**caractérisé en ce que**
pour stabiliser au moins la première rangée (8) de conteneurs empilés dans la région proche de la voie (4) de roulement du portique, un châssis de support (9) est prévu, qui se compose de montants ou supports verticaux, dont la hauteur correspond à la hauteur de l'empilement maximum de conteneurs (13), et dont la dimension horizontale est plus courte que l'étendue longitudinale du plus petit conteneur (13) à empiler, au moins un passage étant formé entre deux colonnes ou supports, par lequel même le plus long conteneur (13) peut être retiré, dans sa direction transversale.
